# EUROPÄISCHE PATENTANMELDUNG

(11) **EP 4 650 814 A1**
(43) Veröffentlichungstag der Anmeldung: **19.11.2025**
(21) Anmeldenummer: 25174968.5
(22) Anmeldetag: 08.05.2025
(51) Int. Cl.: G01S 7/00, G01S 17/06, G01S 17/87, G01S 13/87

(54) **SYSTEM ZUR ERFASSUNG VON INFORMATIONEN ZU EINEM VORGEGEBENEN ÜBERWACHUNGSBEREICH**

(30) Priorität: 17.05.2024 DE 102024113954
(71) Anmelder: SICK AG, 79183 Waldkirch (DE)
(72) Erfinder: OTTMÜLLER, Jan, 21039 Hamburg (DE)
(74) Vertreter: Manitz Finsterwald Patent- und Rechtsanwaltspartnerschaft mbB

(57) **Zusammenfassung**

Die vorliegende Erfindung betrifft ein System zur Erfassung von Informationen zu einem vorgegebenen Überwachungsbereich. Das System umfasst wenigstens zwei Sensoreinheiten mit je wenigstens einem Sensor, wenigstens einem Aktuator zur Variation der Ausrichtung und/oder Position des wenigstens einen Sensors, und je wenigstens einer Steuereinheit zur Steuerung des wenigstens einen Aktuators. Jede Sensoreinheit umfasst eine interne Uhr. Die Uhrzeiten der unterschiedlichen Sensoreinheiten sind miteinander synchronisiert. Die Steuereinheit jeder Sensoreinheit ist dazu ausgebildet, den oder die zugehörigen Aktuatoren basierend auf der synchronisierten Uhrzeit der jeweiligen internen Uhr vorzunehmen.

## Beschreibung

Die vorliegende Erfindung betrifft ein System zur Erfassung von Informationen zu einem vorgegebenen Überwachungsbereich und ein entsprechendes Verfahren.

Herkömmlich umfassen solche Systeme wenigstens zwei Sensoreinheiten mit je wenigstens einem Sensor, wenigstens einem Aktuator zur Variation der Ausrichtung und/oder Position des wenigstens einen Sensors, und wenigstens einer Steuereinheit zur Steuerung des wenigstens einen Aktuators.

Hierbei kann es notwendig sein, die unterschiedlichen Sensoreinheiten in einer bestimmten Art und Weise miteinander zu synchronisieren. Hierfür gibt es unterschiedliche Ansätze. Zur Synchronisierung der Aktuatoren werden diese regelmäßig über eine Synchronisierungsleitung, welche von einer Leitung zur Ausgabe von Messdaten an eine Auswerteinheit verschieden ist, miteinander verbunden. Über diese Synchronisierungsleitung wird direkt ein Steuersignal übermittelt, welches sicherstellt, dass die Tätigkeit der Aktuatoren in der gewünschten Art und Weise synchronisiert ist. Derartige Ausgestaltungen sind jedoch relativ aufwendig umzusetzen und fehleranfällig (insbesondere bei einer Vielzahl von Sensoreinheiten, deren Aktuatoren anhand eines einzelnen Steuersignals zu synchronisieren sind).

Es ist daher eine der Erfindung zugrundeliegende Aufgabe, entsprechende Systeme weiterzuentwickeln.

Diese Aufgabe wird durch ein System gemäß Anspruch 1 gelöst. Vorteilhafte Weiterbildungen sind den abhängigen Ansprüchen zu entnehmen.

Das erfindungsgemäße System zur Erfassung von Informationen zu einem vorgegebenen Überwachungsbereich zeichnet sich dadurch aus, dass jede Sensoreinheit eine interne Uhr umfasst und die Uhrzeiten der unterschiedlichen Sensoreinheiten miteinander synchronisiert sind. Die Steuereinheit jeder Sensoreinheit ist dazu ausgebildet, den oder die zugehörigen Aktuatoren basierend auf der synchronisierten Uhrzeit der jeweiligen internen Uhr vorzunehmen.

Konkret bedeutet dies, dass die Aktuatoren der unterschiedlichen Sensoreinheiten nicht (wie bisher) auf Grundlage eines gemeinsamen Steuersignals gesteuert werden, welches zwischen den unterschiedlichen Sensoreinheiten ausgetauscht wird. Vielmehr ist jede Sensoreinheit für sich unabhängig. Die Steuerung der zugehörigen Aktuatoren erfolgt jeweils auf Grundlage einer internen Uhrzeit der jeweiligen Sensoreinheit. Zur Synchronisierung der Aktuatoren stehen nicht die Aktuatoren (oder deren Steuereinheiten) in Signalaustausch, sondern sind die Uhrzeiten der unterschiedlichen Sensoreinheiten synchronisiert. Dies bietet gleich mehrere Vorteile. Zum einen kann auf eine separate und störanfällige Synchronisierungsleitung zwischen den unterschiedlichen Sensoreinheiten verzichtet werden. Zum anderen ist es besonders einfach möglich, ein gegebenes System um weitere Sensoreinheiten zu ergänzen oder Sensoreinheiten zu entfernen bzw. auszutauschen, ohne den strukturellen Aufbau und/oder die Art und Weise eines Synchronisierungssignals der übrigen Komponenten des Systems modifizieren zu müssen. Ferner ist es bei der Auswertung der Signale der unterschiedlichen Sensoreinheiten nicht mehr notwendig, mögliche Diskrepanzen zwischen der Synchronisierung der Aktuatoren und unterschiedlicher Uhrzeiten des Systems (insbesondere bezüglicher einer umfassenden Systemzeit) zu analysieren und auszugleichen.

Bevorzugt sind die unterschiedlichen Sensoreinheiten jeweils mit einem gemeinsamen Zeitsynchronisator, insbesondere in Gestalt eines "Precision Time Protocol"-PTP-Servers, verbunden.

Die Uhrzeit jeder Sensoreinheit wird unabhängig von den anderen Sensoreinheiten unmittelbar durch den gemeinsamen Zeitsynchronisator vorgegeben. Hierzu ist keine Kommunikation zwischen den unterschiedlichen Sensoreinheiten erforderlich und vorgesehen. Ein derartiges System ist besonders genau, zuverlässig und leicht um weitere Sensoreinheiten erweiterbar.

Bevorzugt sind die internen Uhren der unterschiedlichen Sensoreinheiten mittels "Precision Time Protocol" (PTP) synchronisiert.

Eine solche Synchronisierung ist besonders genau.

Bevorzugt verfügt jede der Sensoreinheiten über einen einzelnen Anschluss, insbesondere in Gestalt einer Ethernet- und/oder einer Feldbusschnittstelle, wobei über diesen einzelnen Anschluss sowohl die Synchronisierung der Uhrzeiten der unterschiedlichen Sensoreinheiten als auch die Ausgabe von Messdaten erfolgt.

Dies ermöglicht eine besonders übersichtliche und kompakte Gesamtausgestaltung.

Beispielsweise werden Feldbusprotokolle, insbesondere Ethernet-basierte Protokolle, vorzugsweise Echtzeit-Feldbusprotokolle, z. B. Sercos III, EIP, EtherCAT, TSN (Time Sensitive Networking), Modbus TCP und/oder ProfiNet IO, zur Kommunikation bzw. Datenübertragung verwendet. Beispielsweise könnte Sercos III als primäres Feldbusprotokoll zur Übertragung von Messdaten verwendet werden. Dieses kann mit EIP als sekundärem Feldbusprotokoll zur Zeitsynchronisierung kombiniert werden. Diese beiden Feldbusprotokolle können außerdem mit Modbus TCP als drittem Feldbusprotokoll für Inbetriebnahmeanwendungen kombiniert werden. Somit können drei verschiedene Feldbusprotokolle nebeneinander (z.B. gleichzeitig) auf demselben Feldbus, d.h. auf derselben Feldbus-Hardware, verwendet werden.

Bevorzugt sind die unterschiedlichen Sensoreinheiten mit einer gemeinsamen Auswerteinheit verbunden, insbesondere in Gestalt eines "Personal Computer".

Dies ermöglicht die zentrale Sammlung und die kombinierte Auswertung der Messdaten der unterschiedlichen Sensoreinheiten.

Bevorzugt handelt es sich bei den Sensoren der Sensoreinheiten um optische Sensoren.

Optische Sensoren ermöglichen eine einfache und zuverlässige Erfassung unterschiedlichster Informationen zu dem jeweiligen Überwachungsbereich.

Bevorzugt handelt es sich bei den Sensoreinheiten um 2D- oder 3D-Laserscanner, bevorzugt um LiDAR-Sensoren.

Derartige Sensoreinheiten eigenen sich besonders gut zur zuverlässigen Erfassung von genauen räumlichen Informationen zu dem jeweiligen Überwachungsbereich.

Bevorzugt sind die Steuereinheiten der unterschiedlichen Sensoreinheiten dazu ausgebildet, die zugehörigen Aktuatoren basierend auf der synchronisierten Uhrzeit der zugehörigen internen Uhr in einem vordefinierten Phasenversatz relativ zu den Aktuatoren der anderen Steuereinheiten zu steuern.

Mit anderen Worten, die vorgesehene Synchronisation der unterschiedlichen Aktuatoren bewirkt einen periodischen Gleichlauf der unterschiedlichen Aktuatoren in einem vordefinierten Phasenversatz. Beispielsweise steuert die Steuereinheit einer ersten Sensoreinheit steuert einen rotatorischen Aktuator eines ersten Sensors derart an, dass dieser zu jeder vollen Sekunde in eine erste vorgegebene Richtung zeigt. Die Steuereinheit einer zweiten Sensoreinheit steuert einen rotatorischen Aktuator eines zweiten Sensors derart an, dass dieser zu jeder vollen Sekunde in eine zweite Richtung zeigt, welche entgegengesetzt zur ersten Richtung zeigt. Dies erleichtert die kombinierte Auswertung der Messdaten der unterschiedlichen Sensoreinheiten.

Bevorzugt sind die unterschiedlichen Sensoreinheiten dazu ausgebildet, ihre Messdaten mit einem Zeitstempel versehen auszugeben.

Dies erleichtert die kombinierte Auswertung der Messdaten der unterschiedlichen Sensoreinheiten, insbesondere vor dem Hintergrund der synchronisierten Uhrzeit dieser.

Bevorzugt sind die vorgesehenen Aktuatoren zur rein rotatorischen Variation der Ausrichtung der zugehörigen Sensoren ausgebildet.

Derartige Systeme sind strukturell einfach, platzsparend und robust sowie zuverlässig umzusetzen.

Ein entsprechendes Verfahren zur synchronen Steuerung von Aktuatoren wenigstens zweier unterschiedlicher Sensoreinheiten, umfasst die Synchronisierung der internen Uhrzeit der unterschiedlichen Sensoreinheiten, insbesondere mittels eines "Precision Time Protocol" (PTP), und die Steuerung der Aktuatoren der unterschiedlichen Sensoreinheiten basierend auf der so synchronisierten Uhrzeit der einzelnen Sensoreinheiten.

Dies ergibt die oben beschriebenen Vorteile.

Nachfolgend wird die Erfindung rein beispielhaft unter Bezugnahme auf die Zeichnungen beschrieben. Es zeigt:
- Fig. 1: schematisch ein beispielhaftes System zur Erfassung von Informationen zu einem vorgegebenen Überwachungsbereich gemäß dem Stand der Technik; und
- Fig. 2: schematisch ein beispielhaftes System zur Erfassung von Informationen zu einem vorgegebenen Überwachungsbereich gemäß der vorliegenden Erfindung.

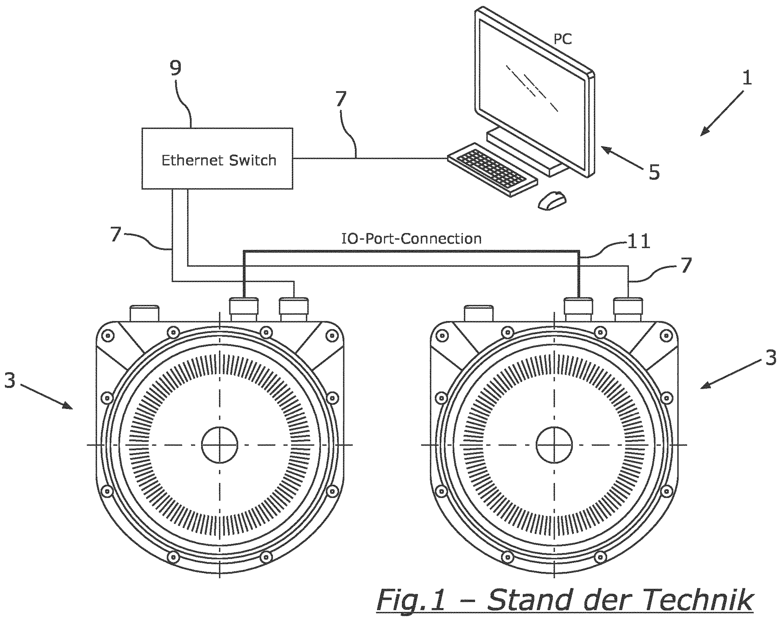

Entsprechend Fig. 1 umfasst ein herkömmliches System 1 zwei Sensoreinheiten 3 die mit einer gemeinsamen Auswerteinheit 5, vorliegend in Gestalt eines "Personal Computer", verbunden oder zumindest verbindbar sind. Im gezeigten Beispiel sind die beiden Sensoreinheiten 3 jeweils über eine separate Datenleitung 7 mit einem Ethernet-Switch 9 verbunden. Dieser ist wiederum über eine separate Datenleitung 7 mit der Auswerteinheit 5 verbunden.

Auch wenn dies vorliegend nicht explizit dargestellt ist, umfasst jede der Sensoreinheiten 3 wenigstens einen Sensor, wenigstens einen Aktuator zur Variation der Ausrichtung und/oder Position des wenigstens einen Sensors, und wenigstens eine Steuereinheit zur Steuerung des wenigstens einen Aktuators.

Die beiden Sensoreinheiten 3 sind über eine ferner vorgesehene Synchronisierungsleitung 11 ("IO-Port-Connection") direkt (also nicht über den Ethernet-Switch 9) miteinander verbunden. Über diese Synchronisierungsleitung 11 können die beiden Sensoreinheiten 3 ein Synchronisierungssignal, insbesondere in Gestalt eines Steuersignals, austauschen. Konkret kann eine der beiden Sensoreinheiten 3 (beispielsweise die linke) als "Master-Sensoreinheit" ausgebildet sein. Dabei kann die Steuereinheit dieser "Master-Sensoreinheit" nicht nur zur Ausgabe eines Steuersignals an den eigenen Aktuator, sondern auch zur Ausgabe eines Steuersignals an die Steuereinheit oder den Aktuator der andere Sensoreinheit 3 (vorliegend der rechten) als "Slave-Sensoreinheit" ausgebildet sein.

Die Synchronisierung der Aktuatoren der unterschiedlichen Sensoreinheiten 3 erfolgt herkömmlich also anhand einer direkten Kommunikation zwischen den beiden Sensoreinheiten 3 und insbesondere über eine extra dafür vorgesehene Synchronisierungsleitung 11. Eine denkbare Synchronisierung der Uhrzeiten der internen Uhren der beiden Sensoreinheiten 3 erfolgt separat bzw. unabhängig von der Synchronisierung der Aktuatoren. Konkret erfolgt im obigen Beispiel die Steuerung zumindest des Aktuators der "Slave-Sensoreinheit" unabhängig von einer internen Uhrzeit der "Slave-Sensoreinheit".

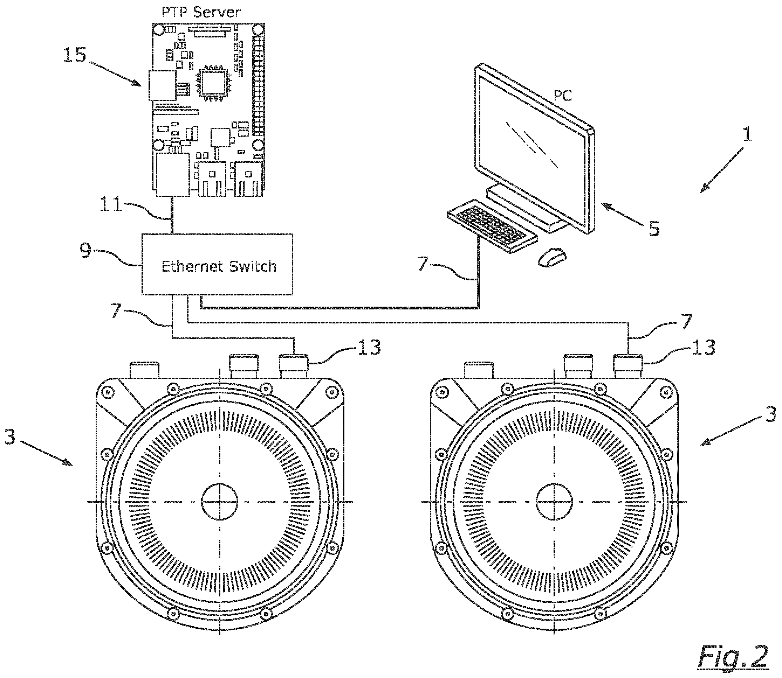

Bezugnehmend auf Fig. 2 benötigt im Gegensatz dazu ein erfindungsgemäß abgewandeltes System keine Synchronisierungsleitung 11 zwischen den unterschiedlichen Sensoreinheiten 3.

Wie in Fig. 2 zu erkennen ist, umfasst jede der Sensoreinheiten 3 einen einzelnen Anschluss 13 sowohl zur Synchronisierung der internen Uhren dieser als auch zur Ausgabe von Messdaten an die gemeinsame Auswerteinheit 5.

Zur Synchronisierung der internen Uhren der unterschiedlichen Sensoreinheiten 3 ist vorliegend ein gemeinsamer Zeitsynchronisator 15 in Gestalt eines PTP-Servers über eine einzelne Synchronisierungsleitung 11 an dem Ethernet-Switch 9 angeschlossen und ausgehend hiervon über die jeweiligen Datenleitungen 7 mit den unterschiedlichen Sensoreinheiten 3 verbunden. Es ist also für eine beliebige Anzahl von Sensoreinheiten lediglich eine einzelne Synchronisationsleitung 11 vorzusehen.

Mittels dieses Zeitsynchronisators 15 wird die Uhrzeiten der internen Uhren der einzelnen Sensoreinheiten 3 synchronisiert. Die Steuerung der Aktuatoren der unterschiedlichen Sensoreinheiten 3 erfolgt jeweils auf Basis der eigenen (synchronisierten) Uhrzeit jeder der Sensoreinheiten 3 und damit effektiv unabhängig von der Steuerung der Aktuatoren und/oder von der Uhrzeit in den übrigen Sensoreinheiten 3. Die Synchronisierung der Aktuatoren der unterschiedlichen Sensoreinheiten erfolgt damit lediglich mittelbar. Dabei ist es aber natürlich gewünscht, dass die Uhrzeit in jeder der Sensoreinheiten 3 einer durch den Zeitsynchronisator 15 definierten gemeinsamen Systemzeit entspricht.

Eine besonders genaue Synchronisierung der internen Uhren der unterschiedlichen Sensoreinheiten 3 ist über "Precision Time Protocol" (PTP) zu erreichen.

Eine fehlerhafte Synchronisierung der Uhrzeit einzelner Sensoreinheiten 3 hat durch unabhängige Steuerung der Aktuatoren der unterschiedlichen Sensoreinheiten keinen negativen Einfluss auf die Funktion der übrigen Sensoreinheiten 3. Ferner ist es möglich, weitere Sensoreinheiten 3 an den Ethernet-Switch 9 anzuschließen, Sensoreinheiten 3 von dem Ethernet-Switch 9 zu entkoppeln und/oder fehlerhafte Sensoreinheiten 3 auszutauschen, ohne die übrigen Komponenten des Systems aufwendig anpassen zu müssen.

Die konkrete Steuerung der Aktuatoren jeder der Sensoreinheiten 3 in Abhängigkeit der jeweils eigenen Uhrzeit kann in der Steuereinheit jeder der einzelnen Sensoreinheiten 3 spezifiziert werden. Bei den unterschiedlichen Sensoreinheiten 3 handelt es sich damit bevorzugt um für sich unabhängige Einheiten, welche bereits nach einmaliger Einstellung bzw. Synchronisierung ihrer Uhrzeit sowie Programmierung ihrer Steuereinheit völlig unabhängig von anderen Sensoreinheiten und/oder speziellen Eingangssignalen arbeiten können.

Eine Zusammenführung und Auswertung der Messdaten der unterschiedlichen Sensoreinheiten 3 erfolgt dann in der Auswerteinheit 5. Zur Erleichterung der Auswertung der Messdaten sowie zur möglichen Fehlererkennung können die Sensoreinheiten 3 ihre jeweiligen Messdaten mit ihrem persönlichen Zeitstempel versehen.

### Bezugszeichenliste

- 1: System zur Erfassung von Informationen zu einem vorgegebenen Überwachungsbereich
- 3: Sensoreinheit
- 5: Auswerteinheit
- 7: Datenleitung
- 9: Ethernet-Switch
- 11: Synchronisierungsleitung
- 13: kombinierter Anschluss
- 15: Zeitsynchronisator/ PTP-Server

## Patentansprüche

1. System zur Erfassung von Informationen zu einem vorgegebenen Überwachungsbereich (1), wobei das System (1) umfasst:
wenigstens zwei Sensoreinheiten (3) mit je wenigstens einem Sensor, wenigstens einem Aktuator zur Variation der Ausrichtung und/oder Position des wenigstens einen Sensors, und je wenigstens einer Steuereinheit zur Steuerung des wenigstens einen Aktuators;
**dadurch gekennzeichnet, dass**
jede Sensoreinheit (3) eine interne Uhr umfasst und die Uhrzeiten der unterschiedlichen Sensoreinheiten (3) miteinander synchronisiert sind; und
die Steuereinheit jeder Sensoreinheit (3) dazu ausgebildet ist, den oder die zugehörigen Aktuatoren basierend auf der synchronisierten Uhrzeit der jeweiligen internen Uhr vorzunehmen.

2. System (1) nach Anspruch 1,
wobei die unterschiedlichen Sensoreinheiten (3) jeweils mit einem gemeinsamen Zeitsynchronisator (15), insbesondere in Gestalt eines "Precision Time Protocol"-PTP-Servers, verbunden sind.

3. System (1) nach Anspruch 1 oder 2,
wobei die internen Uhren der unterschiedlichen Sensoreinheiten (3) mittels "Precision Time Protocol" (PTP) synchronisiert sind.

4. System (1) nach einem der vorangehenden Ansprüche,
wobei jede der Sensoreinheiten (3) über einen einzelnen Anschluss (13) verfügt, insbesondere in Gestalt einer Ethernet- und/oder einer Feldbusschnittstelle, wobei über diesen einzelnen Anschluss (13) sowohl die Synchronisierung der Uhrzeiten der Sensoreinheiten (3) als auch die Ausgabe von Messdaten erfolgt.

5. System (1) nach einem der vorangehenden Ansprüche,
wobei die unterschiedlichen Sensoreinheiten (3) mit einer gemeinsamen Auswerteinheit (5), insbesondere in Gestalt eines "Personal Computer", verbunden sind.

6. System (1) nach einem der vorangehenden Ansprüche,
wobei es sich bei den Sensoren der Sensoreinheiten (3) um optische Sensoren handelt.

7. System (1) nach einem der vorangehenden Ansprüche,
wobei es sich bei den Sensoreinheiten (3) um 2D- oder 3D-Laserscanner, bevorzugt um LiDAR-Sensoren, handelt.

8. System (1) nach einem der vorangehenden Ansprüche,
wobei die Steuereinheiten der unterschiedlichen Sensoreinheiten (3) dazu ausgebildet sind, die zugehörigen Aktuatoren basierend auf der synchronisierten Uhrzeit der zugehörigen internen Uhr in einem vordefinierten Phasenversatz relativ zu den Aktuatoren der anderen Steuereinheiten (3) zu steuern.

9. System (1) nach einem der vorangehenden Ansprüche,
wobei die Sensoreinheiten (3) dazu ausgebildet sind, ihre Messdaten mit einem Zeitstempel versehen auszugeben.

10. System (1) nach einem der vorangehenden Ansprüche,
wobei die vorgesehenen Aktuatoren zur rein rotatorischen Variation der Ausrichtung der zugehörigen Sensoren ausgebildet sind.

11. Verfahren zur synchronen Steuerung von Aktuatoren wenigstens zweier unterschiedlicher Sensoreinheiten (3), wobei das Verfahren umfasst:
Synchronisierung der internen Uhrzeit der unterschiedlichen Sensoreinheiten (3), insbesondere mittels eines "Precision Time Protocol" (PTP); und
Steuerung der Aktuatoren der unterschiedlichen Sensoreinheiten (3) basierend auf der so synchronisierten Uhrzeit der einzelnen Sensoreinheiten (3).
